# EUROPEAN PATENT APPLICATION

(11) **EP 2 192 816 A1**
(43) Date of publication of application: **02.06.2010**
(21) Application number: 08757822.5
(22) Date of filing: 23.06.2008
(51) Int. Cl.: H04W 84/00

(54) **A TRANSMISSION CHANNEL SYNCHRONIZING/TIME ADJUSTING METHOD FOR HIGH SPEED DOWNLINK SHARED CHANNEL**

(30) Priority: 12.09.2007 CN 200710154613
(71) Applicant: ZTE Corporation, Shenzhen, Guangdong 518057 (CN)
(72) Inventor: YANG, Yang, Shenzhen Guangdong 518057 (CN); CHENG, Xiang, Shenzhen Guangdong 518057 (CN); ZHANG, Jian, Shenzhen Guangdong 518057 (CN)
(74) Representative: Grünecker, Kinkeldey, Stockmair & Schwanhäusser Anwaltssozietät
(86) International application number: PCT/CN2008/071413
(87) International publication number: WO 2009/033380

(57) **Abstract**

A method of transport channel synchronization/timing adjustment for High Speed Downlink Shared Channel comprises: for the channel bearing HS-DSCH Frame Protocol TYPE 3, the CRNC configures the receiving window parameters for the Node B, so as to use the transport channel synchronization scheme and/or timing adjustment scheme, wherein the receiving window parameters include at least one of the following: Time of Arrival Window Startpoint, Time of Arrival Window Endpoint.

## Description

### Field of the Invention

The invention relates to the third generation mobile communication system, in particular to a method of transport channel synchronization/timing adjustment for High Speed Downlink Shared Channel (HS-DSCH).

### Background of the Invention

A Connection Frame Number (CFN) is the frame counter for synchronizing the L2/transport channel between the Universal Terrestrial Radio Access Network (UTRAN) and a User Equipment (UE) in the Wideband Code Division Multiple Access (WCDMA) system.

As to the data transmission block with designated CFN, the Node B needs to send at the time corresponding to the CFN via L1. In order to enable the data to reach the Node B in time while taking the load of the Node B cache into consideration, a receiving window is defined on the Node B side. The UTRAN uses the schemes of transport channel synchronization and timing adjustment etc to adjust the sending time of the data frames. The parameters related to the transport channel synchronization and timing adjustment are introduced as follows:

Latest Time of Arrival (LTOA): the latest time for the Node B to be able to receive and process the data, namely, the processing time that the Node B needs before the sending of the data frame via the air interface. The Node B discards the data frames arriving after the LTOA, and sends a timing adjustment control frame to the RNC. The parameter is internally defined in the Node B.

Time of Arrival Window Endpoint (TOAWE): this is the endpoint of the receiving window, which is a time before the LTOA. The downlink data frames should arrive before the TOAWE. The Node B returns a timing adjustment control frame when the data frames arrive after the TOAWE.

Time of Arrival Window Startpoint (TOAWS): this is the startpoint of receiving window, which is a time before the TOAWE. The downlink data frames should arrive after the TOAWS. The Node B returns a timing adjustment control frame when the data frames arrive before the TOAWS.

Time of Arrival (TOA): this is the time difference between the TOAWE and the receiving time of a data frame. A positive TOA means that data frames arrive before the TOAWE, a negative TOA means that data frames arrive after the TOAWE. The Node B can notify the Radio Network Controller (RNC) of the TOA through the uplink transport channel synchronization control frame and timing adjustment control frame.

In the Release-7 version of the Third Generation Partnership Project (3GPP) protocol, the WCDMA system defines three kinds of the HS-DSCH frame protocols: the HS-DSCH Frame Protocol TYPE 1/TYPE 2/TYPE 3, which correspond to three kinds of HS-DSCH data frames: HS-DSCH Data Frame TYPE 1/TYPE 2/TYPE 3.

As to the HS-DSCH DATA FRAME TYPE 1 and TYPE 2, the RNC does not designate the data sending time at L1. The Node B controls the transmission rate of the RNC data through a flow control function. As to the HS-DSCH DATA FRAME TYPE 3, the RNC designates the data sending time at L1. However, the HS-DSCH Frame Protocol Type 3 does not support any control frame, including transport channel synchronization function, timing adjustment function, and flow control function, etc.

Consequently, the RNC can send data frames of HS-DSCH DATA FRAME TYPE 3 at any moment, without considering the load of the Node B cache, which results in the waste of the Node B cache and a longer data cache time; Furthermore, the Node B can neither judge whether the arrival of the data frame is too early or too late, nor judge whether the data frame can be discarded or not.

### Summary of the Invention

With respect to the above mentioned problems in the art, the invention provides a method of transport channel synchronization/timing adjustment for high speed downlink shared channel.

In the method, for a channel bearing HS-DSCH Frame Protocol TYPE 3, the controlling radio network controller configures receiving window parameters for a Node B to use the transport channel synchronization and/or timing adjustment schemes, the receiving window parameters include at least one of the following: TOAWS and TOAWE.

In particular, while establishing or reconfiguring a channel bearing the HS-DSCH Frame Protocol TYPE 3, the CRNC configures the receiving window parameters in a channel establishment message or in a channel reconfiguration message.

On one hand, the processing of the transport channel synchronization using transport channel synchronization scheme comprises: the CRNC sends a downlink transport channel synchronizing control frame to the Node B via the channel bearing HS-DSCH Frame Protocol TYPE 3; the Node B returns an uplink transport channel synchronization control frame to the CRNC; after receiving the uplink transport channel synchronization control frame, the CRNC adjusts a CFN of later sent data frames of the HS-DSCH Data Frame TYPE 3 and/or adjusting the sending time of data frames.

In the above processing, the Node B determinates the arrival time of the downlink transport channel synchronization frame according to the receiving window parameters, and carries the arrival time in the uplink transport channel synchronization control frames, the CRNC adjusts the CFN of the data frames of the HS-DSCH Data Frame TYPE 3 and/or adjusts sending time of data frames according to the arrival time.

Furthermore, the above mentioned processing can further comprises the following steps:
the CRNC initiates a periodic transport channel synchronization for the HS-DSCH, periodically adjusts the local CFN and/or the sending time of the data frames.

On the other hand, the processing of timing adjustment using timing adjustment scheme in the method comprises: the CRNC sends the data frame of the HS-DSCH Data Frame TYPE 3 to the Node B; the Node B compares the arrival time of data frames with the receiving window; if the arrival time of data frame is not within the receiving window, the Node B returns a timing adjustment control frame to the CRNC.

If the arrival time of the data frame is after a Latest Time of Arrival (LTOA) internally defined by the Node B or before the TOWAS, the Node B discards the data frame; If the arrival time of data frame is after the TOAES and before the LTOA, the Node B returns the data frames to a user equipment.

Wherein, the above mentioned processing further comprises: after receiving the timing adjustment control frame, the CRNC adjusts the CFN of later sent data frames of the HS-DSCH Data Frame TYPE 3 and/or adjusts the sending time of data frames.

By adding the configuration of the receiving window of the HS-DSCH Frame Protocol TYPE 3 and schemes of transport channel synchronization and timing adjustment etc, the invention can thus control the sending time of the HS-DSCH DATA FRAME TYPE 3 by the CRNC, balance the data flow of lub interface, and reduce the data cache time of the Node B, so that the system performance is improved.

Other features and advantages of the invention will be illustrated hereinafter in the description and will partly become obvious or understandable through the implementation of the invention. The objectives and other advantages of the invention can be realized and obtained through the structures indicated in the description, claims, and the drawings.

### Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is the schematic drawing of the process for establishment of the HS-DSCH channel according to an embodiment of the invention.
Fig. 2 is the schematic drawing of the process for reconfiguring the HS-DSCH channel according to an embodiment of the invention.
Fig. 3 is the schematic drawing of the process for receiving window use and arrival time judgment according to an embodiment of the invention.
Fig. 4 is the schematic drawing of process for transport channel synchronization according to an embodiment of the invention.
Fig. 5 is the flow chart for transport channel synchronization according to an embodiment of the invention.
Fig. 6 is the schematic drawing for timing adjustment process according to an embodiment of the invention.
Fig. 7 is the flow chart for timing adjustment processing according to an embodiment of the invention.

### Detailed Description of the Invention

The preferred embodiments of the present invention will be described in detail hereinafter with reference to the drawings. It will be appreciated that the preferred embodiments described herein are provided only for illustrating and explaining the present invention not for limiting the present invention.

According to the embodiments of the invention, a method of transport channel synchronization/timing adjustment for HS-DSCH is provided.

In the method, as to a channel bearing the HS-DSCH Frame Protocol TYPE 3, the Controlling Radio Network Controller (CRNC) configures the receiving window parameters for the Node B so as to use the transport channel synchronization/timing adjustment schemes. Wherein, the receiving window parameters include at least one of the following: the TOAWS and the TOAWE.

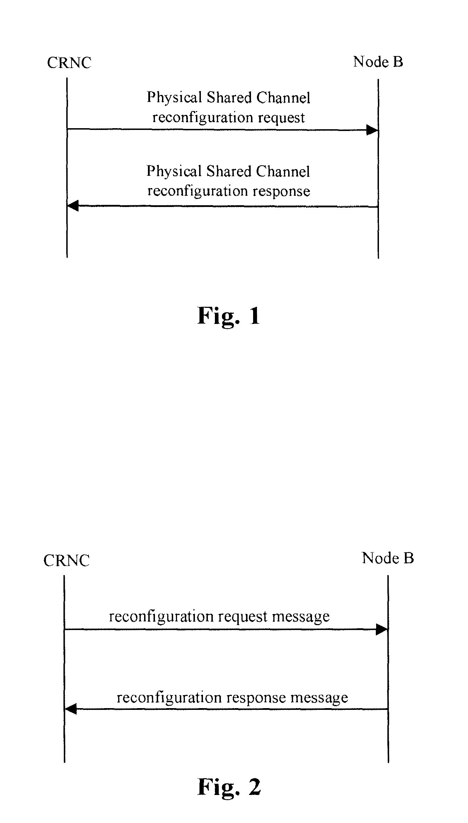

In particular, while establishing or reconfiguring the channel bearing the HS-DSCH Frame Protocol TYPE 3, the CRNC configures the receiving window parameters in a channel establishment message or a channel reconfiguration message. A further description is given to the processing with reference to Fig. 1 and Fig. 2.

In the embodiment, as to the Release-7 protocol corresponding to the 3GGP in June 2007, the HS-DSCH Frame Protocol TYPE 3 is used in Paging MAC Flow, namely, the configured HS-DSCH flow for the UE at Cell_PCH and URA_PCH status. The CRNC initiates a process for the Physical Shared Channel Reconfiguration, in which the establishment information of Paging MAC Flow can be carried. Fig. 1 shows the schematic drawing of the channel establishment. As shown in Fig. 1, while the CRNC establishing the channel bearing the HS-DSCH Frame Protocol TYPE 3, the CRNC configures the receiving window parameters for the Node B via signaling, and the Node B stores the parameters.

Fig. 2 is the schematic drawing of the channel reconfiguration. As shown in Fig. 2, the CRNC sends a reconfiguration request message to the Node B, which carries the modification information of the channel bearing the HS-DSCH Frame Protocol TYPE 3, and then the Node B returns a reconfiguration response message This signaling can be Physical Shared Channel Reconfiguration request message and Physical Shared Channel Reconfiguration response message. While the CRNC modifying the channel bearing the HS-DSCH Frame Protocol TYPE 3, the CRNC configures the receiving window parameters for the Node B via signaling, and the Node B stores the parameters.

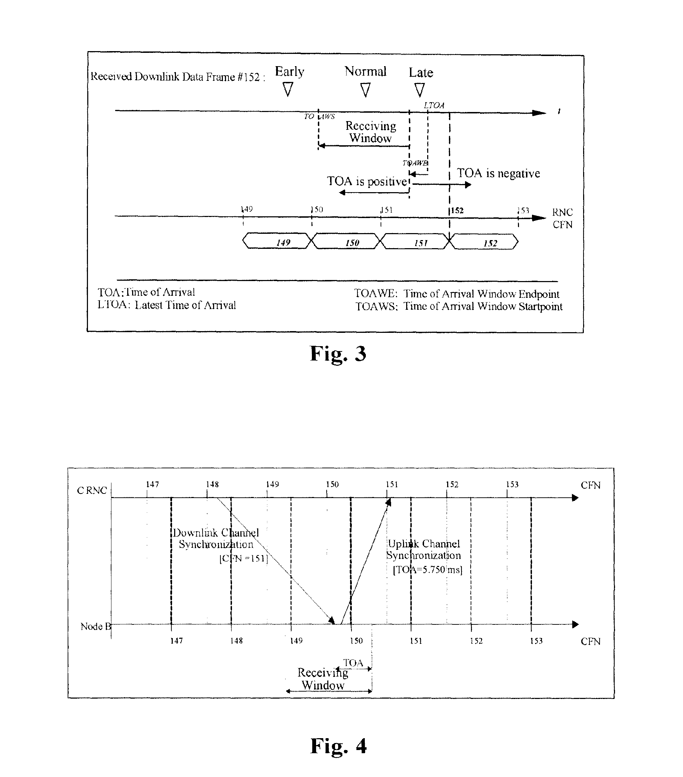

As shown in Fig. 3, as to the above mentioned receiving window parameters TOAWS and TOAWE, it is regarded as too early if the arrival time of the data frame is before the TOAWS; it is regarded as too late if the arrival time of the data frame is after the TOAWE; the data frame with an arrival time after the TOAWE but before the LTOA can still be sent to the UE; the data frame arriving after the LTOA is regarded as too late and thus cannot be sent; the data frame with an arrival time between the TOAWS and the TOAWE is regarded as normal.

On the basis of the above mentioned, Fig. 4 further shows the schematic drawing of the transport channel synchronization processing. In the embodiment of the invention, after the channel bearing the HS-DSCH Frame Protocol TYPE 3 is established, the RNC can initiate the synchronization processing of the transport channel to the HS-DSCH, including a later process of periodic transport channel synchronization. In addition, the CRNC can periodically adjust the local CFN and/or the sending time of data frames. In the embodiment shown in Fig. 4, CFN=151, TOA=5.750ms.

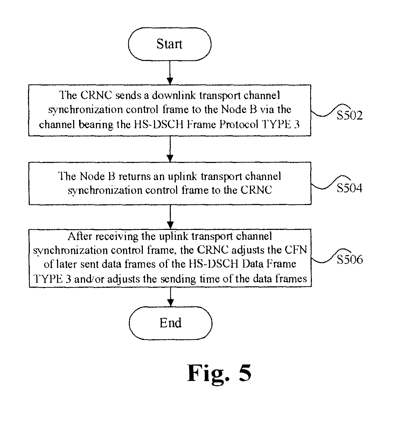

In particular, as shown in Fig. 5, the process of using the transport channel synchronization scheme for synchronizing the transport channel comprises:
step S502, the CRNC sends a downlink transport channel synchronization control frame to the Node B via the channel bearing the HS-DSCH Frame Protocol TYPE 3;
step S504, the Node B returns the an uplink transport channel synchronization control frame to the CRNC;
step S506, after receiving the uplink transport channel synchronization control frame, the CRNC adjusts the CFN of later sent data frames of the HS-DSCH Data Frame TYPE 3 and/or adjusts the sending time of the data frames.

Wherein, in the above mentioned processing, the Node B can determine the TOA of the downlink transport channel synchronization frame according to the receiving window parameters, and carry the TOA in the uplink transport channel synchronization control frame. According to the TOA, the CRNC adjusts the CFN of later sent data frames of the HS-DSCH Data Frame TYPE 3 and/or adjusts the sending time of the data frames.

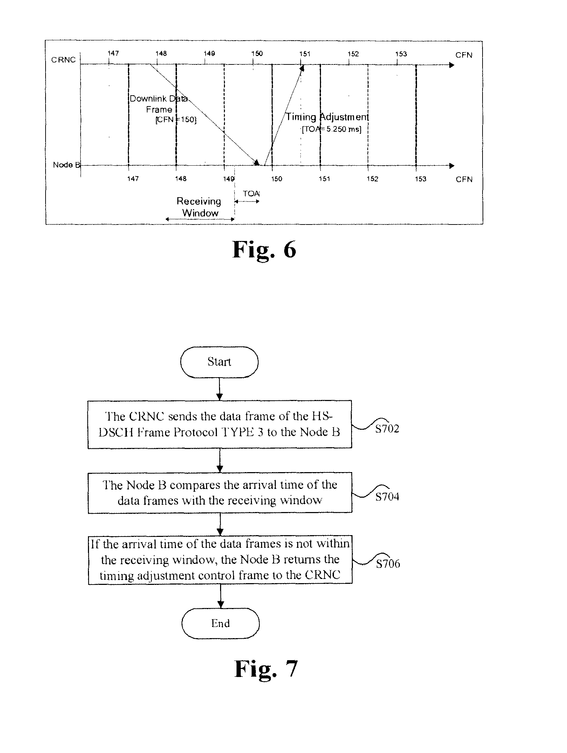

Fig. 6 shows the schematic drawing of the timing adjustment processing. In the embodiment shown in Fig. 6, CFN=150, TOA=5.250ms. In particular, as shown in Fig. 7, the processing using the timing adjustment scheme for adjusting the time comprises:
step S702, the CRNC sends the data frames of the HS-DSCH Frame Protocol TYPE 3 to the Node B;
step S704, the Node B compares the arrival time of the data frames with the receiving window;
step S706, if the arrival time of the data frames is not within the receiving window, the Node B returns the timing adjustment control frame to the CRNC; if the arrival time of the data frames is before the TOAWS or after the LTOA internally defined by the Node B, the Node B discards the data frames; if the data frames arrives before the LTOA and after the TOAWE, the Node B still sends it to the UE.

After the CRNC receiving the timing adjustment control frame, the CRNC adjusts the CFN of later sent data frames of the HS-DSCH Data Frame TYPE 3 and/or adjusts the sending time of the data frames.

In the present invention, through adding the configuration of the receiving window of the HS-DSCH Frame Protocol TYPE 3 and using the schemes of transport channel synchronization and timing adjustment etc, the invention can thus control the sending time of the HS-DSCH Data Frame Type 3 by the CRNC, balance the data flow of the lub interface, and reduce the data cache time in the Node B, thereby improving the system performance

The above description is only to illustrate the preferred embodiments but not to limit the present invention. Various alterations and changes to the present invention are apparent to those skilled in the art. The scope defined in the claims shall comprise any modifications, equivalent substitution and improvements etc. within the spirit and principle of the present invention.

## Claims

1. A method of transport channel synchronization/timing adjustment for High Speed Downlink Shared Channel, HS-DSCH, **characterized in that** for a channel bearing HS-DSCH Frame Protocol TYPE 3, the Controlling Radio Network Controller, CRNC, configuring receiving window parameters for a Node B to use the transport channel synchronization and/or timing adjustment schemes, the receiving window parameters include at least one of the following: Time of Arrival Window Startpoint, TOAWS, and Time of Arrival Window Endpoint, TOAWE.

2. The method according to claim 1, **characterized in that** while establishing or reconfiguring a channel bearing the HS-DSCH Frame Protocol TYPE 3, the CRNC configuring the receiving window parameters in a channel establishment message or in a channel reconfiguration message.

3. The method according to claim 1 or claim 2, **characterized in that** the processing of the transport channel synchronization using transport channel synchronization scheme comprises:
the CRNC sending a downlink transport channel synchronization control frame to the Node B via the channel bearing the HS-DSCH Frame Protocol TYPE 3;
the Node B returning an uplink transport channel synchronization control frame to the CRNC;
after receiving the uplink transport channel synchronization control frame, the CRNC adjusting a Connection Frame Number, CFN, of later sent data frames of the HS-DSCH Data Frame TYPE 3 and/or adjusting the sending time of the data frames.

4. The method according to claim 3, **characterized in that** the Node B determining the arrival time of the downlink transport channel synchronization frame according to the receiving window parameters, and carrying the arrival time in the uplink transport channel synchronization control frames, the CRNC adjusting the CFN of the data frames of the HS-DSCH Data Frame TYPE 3 and/or adjusting the sending time of the data frames according to the arrival time.

5. The method according to claim 3, **characterized in that** the processing further comprises:
the CRNC initiating a periodic transport channel synchronizing for the HS-DSCH, periodically adjusting the local CFN and/or the sending time of the data frames.

6. The method according to claim 1 or claim 2, **characterized in that** the processing of the timing adjustment using timing adjustment scheme comprises:
the CRNC sending the data frames of the HS-DSCH Data Frame TYPE 3 to the Node B;
the Node B comparing the arrival time of the data frames with the receiving window;
if the arrival time of the data frames is not within the receiving window, the Node B returning a timing adjustment control frame to the CRNC.

7. The method according to claim 6, **characterized in that**
If the arrival time of the data frames is after a Latest Time of Arrival, LTOA internally defined by the Node B or before the TOAWS, the Node B discards the data frame;
If the arrival time of the data frames is after the TOAWS and before the LTOA, the Node B returns the data frames to a user equipment.

8. The method according to claim 6, **characterized in that** the processing further comprises:
after receiving the timing adjustment control frame, the CRNC adjusting the CFN of later sent data frames of the HS-DSCH Data Frame TYPE 3 and/or adjusting the sending time of the data frames.
